# EUROPÄISCHE PATENTANMELDUNG

(11) **EP 2 422 863 A1**
(43) Veröffentlichungstag der Anmeldung: **29.02.2012**
(21) Anmeldenummer: 11006592.7
(22) Anmeldetag: 11.08.2011
(51) Int. Cl.: B01D 29/15, B01D 29/23, F15B 21/04

(54) **Filtervorrichtung für Druckmittel**

(30) Priorität: 30.08.2010 DE 102010035801; 23.12.2010 DE 102010055909
(71) Anmelder: Schaeffler Technologies GmbH & Co. KG, 91074 Herzogenaurach (DE)
(72) Erfinder: Grethel, Marco, 77830 Bühlertal (DE)

(57) **Zusammenfassung**

Die Erfindung betrifft eine Filtervorrichtung für Druckmittel.

Die Erfindung zeichnet sich dadurch aus, dass die Filtervorrichtung eine Dichteinrichtung zum Abdichten einer Druckmittelübergabestelle umfasst.

## Beschreibung

Die Erfindung betrifft eine Filtervorrichtung für Druckmittel.

Aus der deutschen Offenlegungsschrift DE 10 2006 016 485 A1 ist eine Filtervorrichtung mit einem Kanal bekannt, in dem ein Filter mit einem Sieb- oder Vlieseinsatz angeordnet ist. Aus der deutschen Patentschrift DE 1 099 792 ist es bekannt, ein Sieb zum Auffangen von Verunreinigungen auswechselbar in einer Leitung unterzubringen. Aus der deutschen Offenlegungsschrift DE 10 2009 016 873 A1 ist eine Vorrichtung zur Steuerung von Fluidbewegungen bekannt, die aus einem porösen oder permeablen Material, wie einem offenzelligen Kunststoffschaum, hergestellt wird.

Aufgabe der Erfindung ist es, eine Filtervorrichtung für Druckmittel, zum Beispiel im Hinblick auf die Anzahl der benötigten Bauteile, die Funktion und/oder den Service, zu verbessern.

Druckmittel im Sinne der Erfindung kann beispielsweise ein Gas wie Luft oder eine Flüssigkeit wie Wasser, Öl oder Hydrauliköl sein.

Die Aufgabe ist bei einer Filtervorrichtung für Druckmittel dadurch gelöst, dass die Filtervorrichtung eine Dichteinrichtung zum Abdichten einer Druckmittelübergabestelle umfasst. Die Druckmittelübergabestelle ist vorzugsweise zwischen einer Getriebegehäuseseite eines Getriebes und einer Steuerungsgehäuseseite einer Steuerung vorgesehen. Durch die erfindungsgemäße Filtervorrichtung wird auf einfache Art und Weise ein unerwünschter Austritt von Druckmittel an der Druckmittelübergabestelle verhindert. Die Steuerung kann zum Beispiel mit einem Sauganschluss ausgestattet sein, über den mit Hilfe einer Pumpe, vorzugsweise über einen Saugfilter, Druckmittel, insbesondere Öl, aus einem Getriebesumpf angesaugt wird. Bei dem Druckmittel handelt es sich vorzugsweise um Hydrauliköl beziehungsweise Öl oder Druckluft. Gemäß einem wesentlichen Aspekt der Erfindung ist die Dichteinrichtung so ausgeführt, dass nicht nur eine Schnittstelle zwischen der Filtervorrichtung und einem Gehäuse, sondern eine Schnittstelle zwischen zwei unterschiedlichen Gehäusen so abgedichtet wird, dass zwar Druckmittel durch die Filtervorrichtung hindurch, aber nicht an der Schnittstelle zwischen den Gehäusen austreten kann.

Ein bevorzugtes Ausführungsbeispiel der Filtervorrichtung ist dadurch gekennzeichnet, dass die Filtervorrichtung ein Siebgehäuse umfasst, an dem die Dichteinrichtung vorgesehen ist. Die Dichteinrichtung kann ein Dichtelement oder mehrere Dichtelemente umfassen.

Ein weiteres bevorzugtes Ausführungsbeispiel der Filtervorrichtung ist dadurch gekennzeichnet, dass das Siebgehäuse aus Kunststoffmaterial gebildet ist. Bei dem Siebgehäuse handelt es sich vorzugsweise um ein Spritzgussteil. Die Filtervorrichtung mit dem Siebgehäuse kann als Mehrkomponenten-Spritzgussteil ausgeführt sein.

Ein weiteres bevorzugtes Ausführungsbeispiel der Filtervorrichtung ist dadurch gekennzeichnet, dass das Siebgehäuse einen Siebkörper mit einem Siebgewebe umfasst. Das Siebgewebe wird bei einem Durchtritt von Druckmittel an der Druckmittelübergabestelle zu Reinigungszwecken von dem Druckmittel durchströmt.

Ein weiteres bevorzugtes Ausführungsbeispiel der Filtervorrichtung ist dadurch gekennzeichnet, dass das Siebgehäuse einen geschlossenen Boden aufweist. Das Siebgehäuse weist vorzugsweise an seinem dem Boden abgewandten Ende einen Fortsatz auf, der zur Darstellung und/oder Aufnahme der Dichteinrichtung dient.

Ein weiteres bevorzugtes Ausführungsbeispiel der Filtervorrichtung ist dadurch gekennzeichnet, dass das Siebgehäuse einen rohrartigen Verbindungskörper umfasst, der zwei Verbindungskanalabschnitte an der Druckmittelübergabestelle druckmitteldicht miteinander verbindet. Der rohrartige Verbindungskörper ist vorzugsweise mit einem Ende in dem Getriebegehäuse und mit dem entgegengesetzten Ende in dem Steuerungsgehäuse angeordnet.

Ein weiteres bevorzugtes Ausführungsbeispiel der Filtervorrichtung ist dadurch gekennzeichnet, dass der rohrartige Verbindungskörper eine getriebeseitige Ringnut für ein getriebeseitiges Dichtelement und eine steuerungsseitige Ringnut für ein steuerungsseitiges Dichtelement umfasst. Die Ringnuten erstrecken sich vorzugsweise radial außen an dem rohrartigen Verbindungskörper in Umfangsrichtung. Bei den Dichtelementen handelt es sich zum Beispiel um O-Ringe.

Ein weiteres bevorzugtes Ausführungsbeispiel der Filtervorrichtung ist dadurch gekennzeichnet, dass das Siebgehäuse einen bundartigen oder kragenartigen Tragkörper für die Dichteinrichtung umfasst. Der bundartige oder kragenartige Tragkörper greift vorzugsweise in eine Ringnut, die zwischen dem Getriebegehäuse und dem Steuerungsgehäuse ausgebildet ist.

Ein weiteres bevorzugtes Ausführungsbeispiel der Filtervorrichtung ist dadurch gekennzeichnet, dass der bundartige oder kragenartige Tragkörper eine getriebeseitige Ringnut für ein getriebeseitiges Dichtelement und eine steuerungsseitige Ringnut für ein steuerungsseitiges Dichtelement umfasst. Die getriebeseitige Ringnut ist vorzugsweise an einer Stimseite des Tragkörpers vorgesehen. Die steuerungsseitige Ringnut ist vorzugsweise an der entgegengesetzten Stirnseite des Tragkörpers vorgesehen. Die Dichtelemente können als O-Ringe ausgeführt sein.

Ein weiteres bevorzugtes Ausführungsbeispiel der Filtervorrichtung ist dadurch gekennzeichnet, dass der bundartige oder kragenartige Tragkörper zur Darstellung der Dichteinrichtung mit einem Kunststoffmaterial umspritzt ist. Die Kunststoffumspritzung dient vorzugsweise auch dazu, die Filtervorrichtung bei der Montage in einem Gehäuse zu positionieren. Vorteilhafterweise kann das Kunststoffmaterial ein Elastomer sein. Anstelle des Kunststoffmaterials kann nach einem weiteren vorteilhaften Ausführungsbeispiel der bundartige oder kragenartige Tragkörper zur Darstellung der Dichteinrichtung mit einem Gummimaterial umgeben sein. Selbstverständlich sind auch Kombinationen aus einem umspritzten Kunststoff material und einem Gummimaterial zur Bildung der Dichteinrichtung möglich.

Ein weiteres bevorzugtes Ausführungsbeispiel der Filtervorrichtung ist dadurch gekennzeichnet, dass das umspritzte Kunststoffmaterial oder das Gummimaterial einen Verbindungssteg zu einem oder mehreren weiteren Filtervorrichtungen aufweist, so dass ein Verbund aus mindestens zwei Filtervorrichtungen darstellbar ist. Dadurch ist es möglich, mehrere Siebkörper mit bundartigen oder kragenartigen Tragkörper mittels Stegen aus dem umspritzten Kunststoffmaterial bzw. dem Gummimaterial zu einer Verbund-Filtervorrichtung zu verbinden. Die Stege können auch in einem Arbeitsgang bei dem Umfassen der Tragkörper mit Kunststoff- bzw. Gummimaterial hergestellt werden. Dies kann einen Vorteil bei der Handhabung, also der Montage bei einer Vielzahl von Filtervorrichtungen, also Siebelementen mit Dichtungen, haben. Es können auf diese Weise auch Einbaufehler vermieden werden, wenn in ihren Abmessungen verschiedene Filtervorrichtungen in einem Steuerungsgehäuse zu verbauen sind.

Die Erfindung betrifft auch ein Getriebe mit einem Getriebegehäuse, an das ein Steuerungsgehäuse einer Steuerung angebaut ist. An mindestens einer Schnittstelle zwischen dem Getriebegehäuse und dem Steuerungsgehäuse ist eine Druckmittelübergabestelle vorgesehen, an der eine vorab beschriebene Filtervorrichtung eingebaut ist.

Weitere Vorteile, Merkmale und Einzelheiten der Erfindung ergeben sich aus der nachfolgenden Beschreibung, in der unter Bezugnahme auf die Zeichnung verschiedene Ausführungsbeispiele im Einzelnen beschrieben sind. Es zeigen:
- Figur 1: eine vereinfachte Darstellung einer erfindungsgemäßen Filtervorrichtung mit einem rohrartigen Verbindungskörper im eingebauten Zustand im Längsschnitt;
- Figur 2: eine Filtervorrichtung mit einem kragenartigen Tragkörper im eingebauten Zustand im Längsschnitt;
- Figur 3: eine ähnliche Filtervorrichtung wie in Figur 2 mit einer Kunststoffumspritzung und
- Figur 4: einen Verbund von Filtervorrichtungen mit einer Kunststoffumspritzung wie in Figur 3.

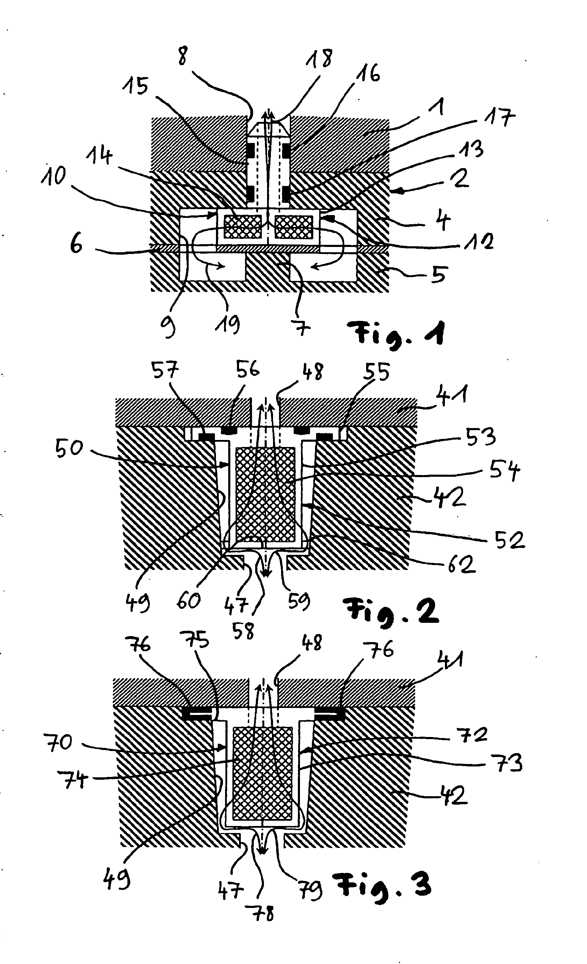

In den Figuren 1 bis 4 ist jeweils ein Teil eines Getriebegehäuses 1; 41 eines Getriebes im Schnitt dargestellt. Bei dem Getriebe handelt es sich zum Beispiel um ein stufenlos verstellbares Getriebe, das auch als CVT (Continuously Variable Transmission) Getriebe bezeichnet wird. Bei dem Getriebe kann es sich aber auch um ein Doppelkupplungsgetriebe oder ein Stufenautomatikgetriebe handeln.

An das Getriebegehäuse 1; 41 ist ein Steuerungsgehäuse 2; 42 einer Steuerung angebaut. Die Steuerung dient zum Beispiel dazu, hydraulische Aktoren des Getriebes anzusteuern beziehungsweise zu betätigen. Die Ansteuerung beziehungsweise Betätigung der Aktoren erfolgt über Druckmittel, insbesondere Hydrauliköl, das an der in den Figuren 1 bis 4 dargestellten Schnittstelle zwischen dem Getriebegehäuse 1; 41 und dem Steuerungsgehäuse 2; 42 definiert hindurch tritt beziehungsweise übergeben wird. Daher wird die dargestellte Schnittstelle auch als Druckmittelübergabestelle bezeichnet. An der Druckmittelübergabestelle wird ein mit Druck beaufschlagter Druckmittelvolumenstrom übergeben. Daher ist es wichtig, dass die Schnittstelle zwischen dem Getriebegehäuse 1; 41 und dem Steuerungsgehäuse 2; 42 zur Umgebung abgedichtet wird.

Das in Figur 1 dargestellte Steuerungsgehäuse 2 umfasst zwei Steuerplatten 4, 5 zwischen denen ein Zwischenblech 6 angeordnet ist. Das Zwischenblech 6 ist in einem zentralen Bereich der Schnittdarstellung durch einen Ansatz 7 abgestützt, der an der Steuerplatte 5 ausgebildet ist. Ein Verbindungskanal 8 erstreckt sich durch das Getriebegehäuse 1 und die Steuerplatte 4 hindurch in einen Aufnahmeraum 9, der von Ausnehmungen in den beiden Steuerplatten 4, 5 begrenzt wird. Das Zwischenblech 6 weist in dem Aufnahmeraum 9 Durchtrittsöffnungen auf, die den Durchtritt von Druckmittel ermöglichen.

In dem Aufnahmeraum 9 ist eine Filtervorrichtung 10 mit einem Siebgehäuse 12 angeordnet. Das Siebgehäuse 12 der Filtervorrichtung 10 umfasst einen Siebkörper 13, der in dem Aufnahmeraum 9 zwischen der Steuerplatte 4 und dem Zwischenblech 6 angeordnet ist. Der Ansatz 7 stützt das Zwischenblech 6 unterhalb des Siebkörpers 13 ab. Der Siebkörper 13 umfasst Durchtrittsöffnungen für Druckmittel, die mit Siebgewebe 14 ausgefüllt sind. Das Siebgewebe 14 dient dazu, durch den Siebkörper 13 hindurchtretendes Druckmittel zu filtern.

Von dem Siebkörper 13 erstreckt sich ein rohrartiger Verbindungskörper 15 des Siebgehäuses 12 in den Verbindungskanal 8. Der rohrartige Verbindungskörper 15 erstreckt sich von dem Aufnahmeraum 9 durch die Steuerplatte 4 in das Getriebegehäuse 1 hinein. Zur Abdichtung der Schnittstelle zwischen dem Getriebegehäuse 1 und dem Steuerungsgehäuse 2 sind an dem rohrartigen Verbindungskörper 15 ein getriebeseitiges Dichtelement 16 und ein steuerungsseitiges Dichtelement 17 angebracht.

Bei den Dichtelementen 16 und 17 handelt es sich zum Beispiel um O-Ringe, die in Ringnuten aufgenommen sind, die an der äußeren Mantelfläche des rohrartigen Verbindungskörpers 15 vorgesehen sind. Durch Doppelpfeile 18, 19 ist angedeutet, dass der rohrartige Verbindungskörper 15 den Durchtritt von Druckmittel in beiden Richtungen, das heißt von dem Getriebegehäuse 1 in das Steuerungsgehäuse 2 und vom dem Steuerungsgehäuse 2 in das Getriebegehäuse 1 ermöglicht. Dabei sorgen die beiden Dichtelemente 16, 17 dafür, dass an der Druckmittelübergabestelle beziehungsweise Schnittstelle zwischen dem Getriebegehäuse 1 und dem Steuerungsgehäuse 2 kein Druckmittel austritt.

Bei den in den Figuren 2, 3 und 4 dargestellten Ausführungsbeispielen weist das Steuerungsgehäuse 42 einen Verbindungskanal 47 auf. Das Getriebegehäuse 41 weist einen Verbindungskanal 48 auf. Die Verbindungskanäle 47, 48 münden in einen Aufnahmeraum 49, der von einer Ausnehmung in dem Steuerungsgehäuse 42 gebildet wird. In den Figuren 2 bis 4 sind ein Zwischenblech und eine untere Steuerplatte (Bezugszeichen 5 und 6 in Figur 1) nicht dargestellt. Ein Zwischenblech würde sich unterhalb des Steuerungsgehäuses 42, welches eine erste Steuerplatte bildet, anschließen und unter dem Zwischenblech wiederum wäre eine zweite Steuerplatte angeordnet.

In dem Ausführungsbeispiel der Figur 2 ist in dem Aufnahmeraum 49 eine Filtervorrichtung 50 mit einem Siebgehäuse 52 angeordnet. Das Siebgehäuse 52 umfasst einen Siebkörper 53 mit Durchtrittsöffnungen für Druckmittel. In den Durchtrittsöffnungen des Siebkörpers 53 ist Siebgewebe 54 angeordnet, das zum Filtern von durchtretendem Druckmittel dient.

An dem dem Getriebegehäuse 41 zugewandten Ende des Siebkörpers 53 ist ein kragenartiger Tragkörper 55 abgewinkelt. An dem kragenartigen Tragkörper 55 sind zwei Dichtelemente 56, 57 angebracht. Das Dichtelement 56 dient zur Abdichtung zum Getriebegehäuse 41 hin und wird daher auch als getriebeseitiges Dichtelement 56 bezeichnet. Das Dichtelement 57 dient zur Abdichtung zum Steuerungsgehäuse 42 hin und wird daher auch als steuerungsseitiges Dichtelement 57 bezeichnet.

Die beiden Dichtelemente 56, 57 sind zum Beispiel als O-Ringe ausgeführt und in entsprechenden Ringnuten des Tragkörpers 55 aufgenommen. Durch Doppelpfeile 58, 59 ist angedeutet, dass die Filtervorrichtung 50 auf einfache Art und Weise einen gefilterten Durchtritt von Druckmittel zwischen den Verbindungskanälen 47, 48 ermöglicht.

Das Siebgehäuse 52 ist an seinem dem Tragkörper 55 abgewandten Ende durch einen Boden 60 verschlossen. Im Bereich des Bodens 60 ist das Siebgehäuse 52 radial außen mit Hilfe von Stützstiften 62 in dem Aufnahmeraum 49 abgestützt. Die Stützstifte 62 können von Druckmittel umströmt werden. Die Stützstifte 62 sind vorzugsweise einstückig mit dem Siebgehäuse 52 verbunden und so ausgelegt, dass sie sich bei der Montage der Filtervorrichtung 50 in dem Aufnahmeraum 49 plastisch verformen können.

Bei dem in Figur 3 dargestellten Ausführungsbeispiel ist eine ähnliche Filtervorrichtung 70 wie bei dem vorangegangenen Ausführungsbeispiel in dem Aufnahmeraum 49 angeordnet. Die Filtervorrichtung 70 umfasst ein Siebgehäuse 72 mit einem Siebkörper 73 und Siebgewebe 74. Im Unterschied zu dem vorangegangenen Ausführungsbeispiel weist das Siebgehäuse 72 keine Stützstifte auf.

Die Filtervorrichtung 70 wird allein durch einen kragenartigen Tragkörper 75 in dem Aufnahmeraum 49 positioniert. Zu diesem Zweck ist der kragenartige Tragkörper 75 mit einer Kunststoffumspritzung 76 versehen. Die Kunststoffumspritzung 76 ist vorzugsweise aus einem elastomeren Kunststoffmaterial gebildet. Durch Doppelpfeile 78, 79 ist angedeutet, wie die Filtervorrichtung 70 mit Druckmittel durchströmt wird. Dabei wird die Schnittstelle zwischen dem Getriebegehäuse 41 und dem Steuerungsgehäuse 42 durch die Kunststoffumspritzung 46 druckmitteldicht abgedichtet.

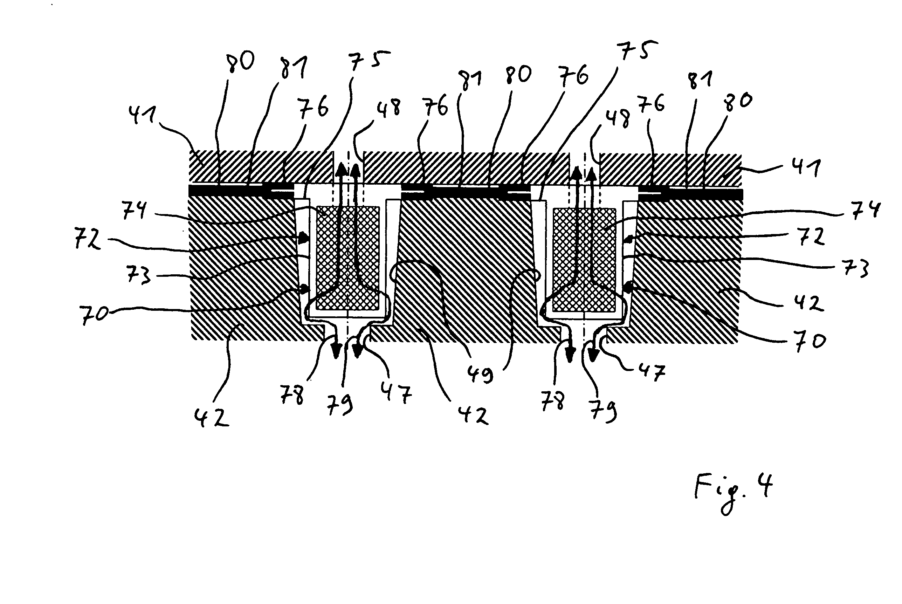

Bei dem in Figur 4 dargestellten Ausführungsbeispiel ist ein Verbund von zwei Filtervorrichtungen 70 ähnlich den Filtervorrichtungen gemäß Figur 3 dargestellt, gleiche Bauteile sind mit den gleichen Bezugszeichen versehen. Der Aufbau und die Funktion der einzelnen Filtervorrichtungen 70 entspricht Figur 3. Der Unterschied besteht darin, dass die beiden Filtereinrichtungen 70 mittels eines Verbindungsstegs 80 miteinander verbunden sind, der zwischen den Kunststoffumspritzungen 76 der kragenartigen Tragkörper 75 vorgesehen ist. Die Verbindungsstege 80 weisen eine geringere Dicke als die Kunststoffumspritzungen 76 auf, so dass im Bereich der Verbindungsstege 80 ein Freiraum 81 entsteht. Dadurch wird eine definierte Anlage und Anpressung der kragenartigen Tragkörper 75 bzw. deren Kunststoffumspritzungen 76 mit dem Getriebegehäuse 41 und dem Steuerungsgehäuse 42 erreicht.

Es versteht sich von selbst, dass weitere hier nicht dargestellte Filtervorrichtungen auch mit unterschiedlichen geometrischen Abmessungen mittels der Stege 80 miteinander verbunden sein können, insbesondere alle zwischen dem Getriebegehäuse 41 und dem Steuerungsgehäuse 42 erforderüchen Siebvorrichtungen. Auf diese Weise kann ein einziges Bauteil mit Siebvorrichtungen 70 und deren kragenartige Tragkörper 75 mit Kunststoffumspritzung 76 als Übergabestellenabdichtung dargestellt werden. Der Einbau eines solchen Verbundbauteils ist einfacher und vermeidet Fehler beim Zusammenbau.

### Bezugszeichenliste

- 1: Getriebegehäuse
- 2: Steuerungsgehäuse
- 4: Steuerplatte
- 5: Steuerplatte
- 6: Zwischenblech
- 7: Ansatz
- 8: Verbindungskanal
- 9: Aufnahmeraum
- 10: Filtervorrichtung
- 12: Siebgehäuse
- 13: Siebkörper
- 14: Siebgewebe
- 15: Verbindungskörper
- 16: Dichtelement
- 17: Dichtelement
- 18: Doppelpfeil
- 19: Doppelpfeil
- 41: Getriebegehäuse
- 42: Steuerungsgehäuse
- 57: Verbindungskanal
- 48: Verbindungskanal
- 49: Aufnahmeraum
- 50: Filtervorrichtung
- 52: Siebgehäuse
- 53: Siebgehäuse
- 54: Siebgewebe
- 55: kragenartiger Tragkörper
- 56: Dichtelement
- 57: Dichtelement
- 58: Doppelpfeil
- 59: Doppelpfeil
- 60: Boden
- 62: Stützstifte
- 70: Filtervorrichtung
- 72: Siebgehäuse
- 73: Siebkörper
- 74: Siebgewebe
- 75: kragenartiger Tragkörper
- 76: Kunststoffumspritzung
- 78: Doppelpfeil
- 79: Doppelpfeil
- 80: Verbindungssteg
- 81: Freiraum

## Patentansprüche

1. Filtervorrichtung für Druckmittel, **dadurch gekennzeichnet, dass** die Filtervorrichtung (10; 50; 70) eine Dichteinrichtung zum Abdichten einer Druckmittelübergabestelle umfasst.

2. Filtervorrichtung nach Anspruch 1, **dadurch gekennzeichnet, dass** die Filtervorrichtung (10; 50; 70) ein Siebgehäuse (12; 52; 72) umfasst, an dem die Dichteinrichtung vorgesehen ist.

3. Filtervorrichtung nach Anspruch 2, **dadurch gekennzeichnet, dass** das Siebgehäuse (12;52;72) aus Kunststoffmaterial gebildet ist.

4. Filtervorrichtung nach Anspruch 2 oder 3, **dadurch gekennzeichnet, dass** das Siebgehäuse (12;52;72) einen Siebkörper (13;53;73) mit einem Siebgewebe (14;54;74) umfasst.

5. Filtervorrichtung nach einem der Ansprüche 2 bis 4, **dadurch gekennzeichnet, dass** das Siebgehäuse (50; 70) einen geschlossenen Boden (60) aufinreist.

6. Filtervorrichtung nach einem der Ansprüche 2 bis 5, **dadurch gekennzeichnet, dass** das Siebgehäuse (12) einen rohrartigen Verbindungskörper (15) umfasst, der zwei Verbindungskanalabschnitte an der Druckmittelübergabestelle druckmitteldicht miteinander verbindet.

7. Filtervorrichtung nach Anspruch 6, **dadurch gekennzeichnet, dass** der rohrartige Verbindungskörper (15) eine getriebeseitige Ringnut für ein getriebeseitiges Dichtelement (16) und eine steuerungsseitige Ringnut für ein steuerungsseitiges Dichtelement (17) umfasst.

8. Filtervorrichtung nach einem der Ansprüche 2 bis 5, **dadurch gekennzeichnet, dass** das Siebgehäuse (50; 70) einen bundartigen oder kragenartigen Tragkörper (55; 75) für die Dichteinrichtung umfasst.

9. Filtervorrichtung nach Anspruch 8, **dadurch gekennzeichnet, dass** der bundartige oder kragenartige Tragkörper (55) eine getriebeseitige Ringnut für ein getriebeseitiges Dichtelement (56) und eine steuerungsseitige Ringnut für ein steuerungsseitiges Dichtelement (57) umfasst.

10. Filtervorrichtung nach Anspruch 8, **dadurch gekennzeichnet, dass** der bundartige oder kragenartige Tragkörper (75) zur Darstellung der Dichteinrichtung mit einem Kunststoffmaterial (76) umspritzt ist.

11. Filtervorrichtung nach Anspruch 8, **dadurch gekennzeichnet, dass** der bundartige oder kragenartige Tragkörper (75) zur Darstellung der Dichteinrichtung mit einem Gummimaterial umgeben ist.

12. Filtervorrichtung nach Anspruch 10 oder 11, **dadurch gekennzeichnet, dass** das umspritzte Kunststoffmaterial (76) oder das Gummimaterial einen Verbindungssteg (80) zu einem oder mehreren weiteren Filtervorrichtungen (70) aufweist, so dass ein Verbund aus mindestens zwei Filtervorrichtungen (70) darstellbar ist.
